# EUROPEAN PATENT APPLICATION

(11) **EP 4 089 774 A1**
(43) Date of publication of application: **16.11.2022**
(21) Application number: 21186301.4
(22) Date of filing: 19.07.2021
(51) Int. Cl.: H01M 10/04, H01M 50/103, H01M 50/15, H01M 50/169, H01M 50/474, H01M 50/486, H01M 50/586, H01M 50/59

(54) **BATTERY MANUFACTURING METHOD AND BATTERY**

(30) Priority: 14.05.2021 CN 202110533765
(71) Applicant: CALB Co., Ltd., Changzhou City, Jiangsu Province (CN)
(72) Inventor: PAN, Fangfang, Changzhou City, Jiangsu Province (CN); XU, Jiuling, Changzhou City, Jiangsu Province (CN); ZHANG, Yongjie, Luoyang City, Henan Province (CN); QI, Binwei, Luoyang City, Henan Province (CN); HE, Deyu, Changzhou City, Jiangsu Province (CN)
(74) Representative: Becker, Eberhard

(57) **Abstract**

The disclosure relates to the technical field of batteries, and provides a battery manufacturing method and a battery. The battery manufacturing method includes the following steps. Providing a first casing (40) that includes one of an upper cover and a bottom plate of a battery casing, and laminating on the first casing (40) to form a laminated cell (20).

## Description

### BACKGROUND

### Technical Field

The disclosure relates to the technical field of batteries, and particularly relates to a battery manufacturing method and a battery.

### Description of Related Art

In the battery production process in related technologies, it is required to separately manufacture a cell and then assemble the cell in a casing for sealing. The assembly process affects the battery production efficiency to a large extent.

### SUMMARY

The disclosure provides a battery manufacturing method and a battery.

According to the first aspect of the disclosure, a battery manufacturing method is provided and includes the following steps. Providing a first casing that includes one of an upper cover and a bottom plate of a battery casing, and laminating on the first casing to form a laminated cell.

According to the second aspect of the disclosure, a battery is provided and includes the battery obtained by the above-mentioned battery manufacturing method.

According to the third aspect of the disclosure, a battery is provided and includes a first casing, a second casing, and a laminated cell sealed in the first casing and the second casing. The laminated cell includes a first pole piece, a second pole piece, and a separator film. The separator film is disposed between the first pole piece and the second pole piece, and the separator film includes a first end and a second end. The first end is a starting end when the separator film is stacked, and the second end is an ending end when the separator film is stacked. The laminated cell has a bottom surface. The bottom surface is formed first when stacking to form the laminated cell, and the second end does not contact the bottom surface.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a flowchart showing a battery manufacturing method according to an exemplary embodiment.
FIG. 2 is a schematic structural diagram showing a structure of an insulating mylar according to an exemplary embodiment.
FIG. 3 is an exploded schematic structural diagram showing a partial structure of a battery according to an exemplary embodiment.
FIG. 4 is a schematic diagram showing a partial structure of a battery according to an exemplary embodiment.
FIG. 5 is an exploded schematic structural diagram showing a first casing and a second casing of a battery according to an exemplary embodiment.
FIG. 6 is a schematic structural diagram showing a cell of a battery according to an exemplary embodiment.
FIG. 7 is a schematic structural diagram showing a laminating manner of a battery manufacturing method according to an exemplary embodiment.
FIG. 8 is a schematic structural diagram showing another laminating manner of a battery manufacturing method according to an exemplary embodiment.
FIG. 9 is a schematic structural diagram showing a laminating manner of a battery manufacturing method according to another exemplary embodiment.
FIG. 10 is a schematic structural diagram showing another laminating manner of a battery manufacturing method according to another exemplary embodiment.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

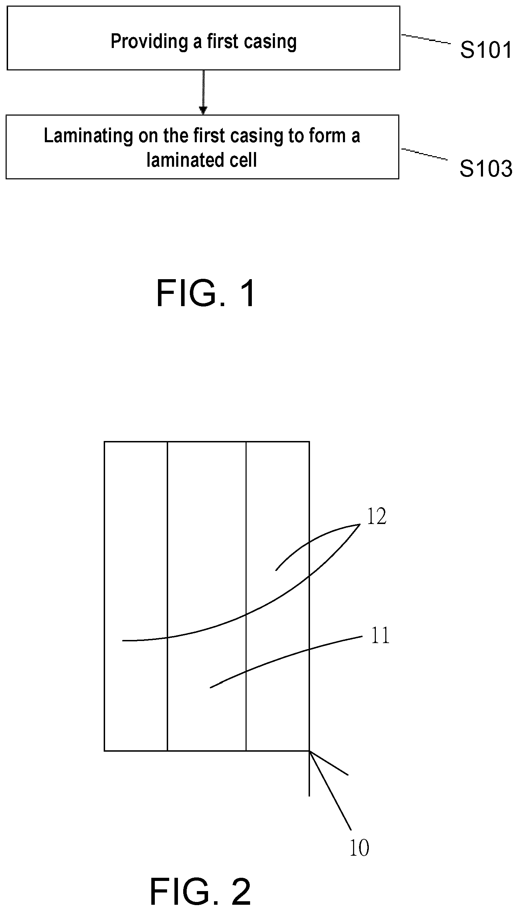

An embodiment of the disclosure provides a battery manufacturing method. Referring to FIG. 1, the battery manufacturing method includes the following steps:
S 101, providing a first casing 40 that includes one of an upper cover and a bottom plate of a battery casing; and
S103, laminating on the first casing 40 to form a laminated cell 20.

The battery manufacturing method according to an embodiment of the disclosure laminates on the first casing 40 to form the laminated cell 20, so as to omit a process of moving the laminated cell 20 to the battery casing, thereby improving the manufacturing efficiency of a battery.

It should be noted that, a forming method of the laminated cell 20 may be a forming method in the related art, and is not limited here, for example, zigzag continuous lamination method can be adopted, or a manner that the pole pieces and separator films are sequentially stacked can be adopted.

The position of the laminated cell 20 on the first casing 40 is relatively fixed, so as to ensure that the laminated cell 20 is formed on the first casing 40, and there is no need to move the laminated cell 20 for completing subsequent sealing after the laminated cell 20 is formed. Thus, the production efficiency is improved, and the laminated cell 20 does not fall apart.

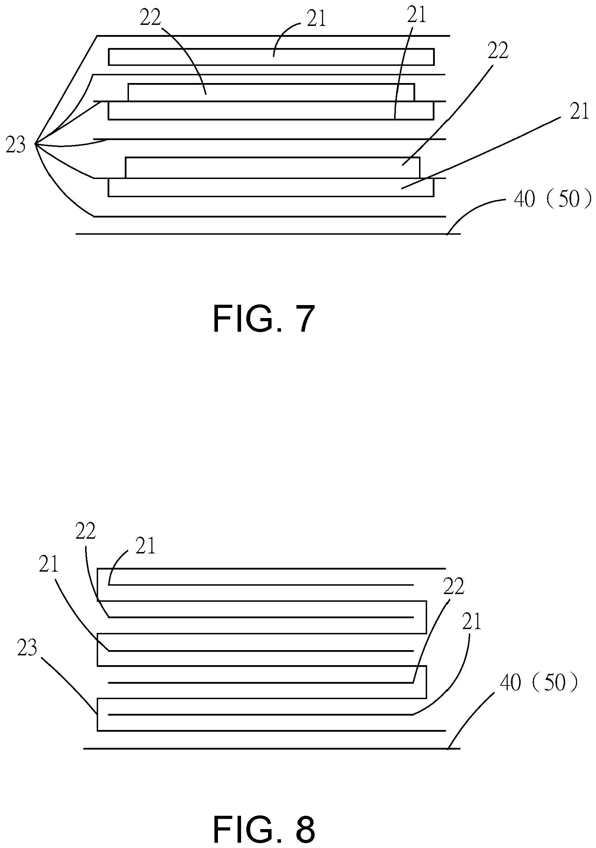

When using zigzag continuous lamination, the positive pole piece and the negative pole piece are respectively placed on the upper and lower surfaces of the separator film 23, and the positive pole piece and the negative pole piece are respectively fixed to the upper and lower surfaces of the separator film 23, so as to form a set of composite units on the separator film 23. According to the specifications of the laminated cell 20 required, multiple sets of composite units are formed on the separator film 23 at intervals along a length direction of the separator film 23, and in the last set of composite units, only the negative pole piece is retained on the separator film 23. When the lamination on the first casing 40 starts, after the first set of composite units is positioned on the first casing 40, the remaining sets of composite units are sequentially stacked on the first set of composite units with the positive pole pieces facing upward. After the last set of composite units is stacked to form a stacked unit, the separator film is cut, and then the laminated cell 20 is formed after hot pressing. Referring to FIG. 8, a first pole piece 21 may be the negative pole piece and a second pole piece 22 may be the positive pole piece. The first pole piece 21 and the second pole piece 22 shown in FIG. 8 are separated from the separator film 23. In the actual operation, the first pole piece 21 and the second pole piece 22 are respectively attached to the upper and lower surfaces of the separator film 23.

It should be noted that, the battery casing includes the first casing 40 and the second casing 50, and the battery casing is used to seal the laminated cell 20. The sealed laminated cell 20 includes the first pole piece 21, the separator film 23, and the second pole piece 22 that are stacked. The laminated direction of the sealed laminated cell 20 is a first direction, and two opposite surfaces of the laminated cell 20 in the first direction respectively correspond to an upper cover and a bottom plate of the battery casing. The inner surfaces of the upper cover and the bottom plate facing the laminated cell 20 can be understood as the upper surfaces of the first casing 40 and the second casing 50.

In an embodiment, the battery manufacturing method further includes providing the second casing 50 after forming the laminated cell 20, and connecting the second casing 50 and the first casing 40 to seal the laminated cell 20. The second casing 50 includes the other one of the upper cover and the bottom plate of the battery casing. That is, the first casing 40 and the second casing 50 constitute the battery casing, thereby sealing the laminated cell 20. The second casing 50 and the first casing 40 can be welded, or of course, can also be adhered.

It should be noted that, when the laminated cell 20 is formed on the first casing 40, the second casing 50 is moved to the first casing 40 in which the laminated cell 20 is placed, and is docked at the first casing 40, so as to complete subsequent connection. Optionally, when the laminated cell 20 is formed on the second casing 50, the first casing 40 is moved to the second casing 50 in which the laminated cell 20 is placed, and is docked at the second casing 50, so as to complete subsequent connection.

In an embodiment, at least one of the first casing 40 and the second casing 50 is formed with an accommodating cavity 41 for accommodating the laminated cell 20.

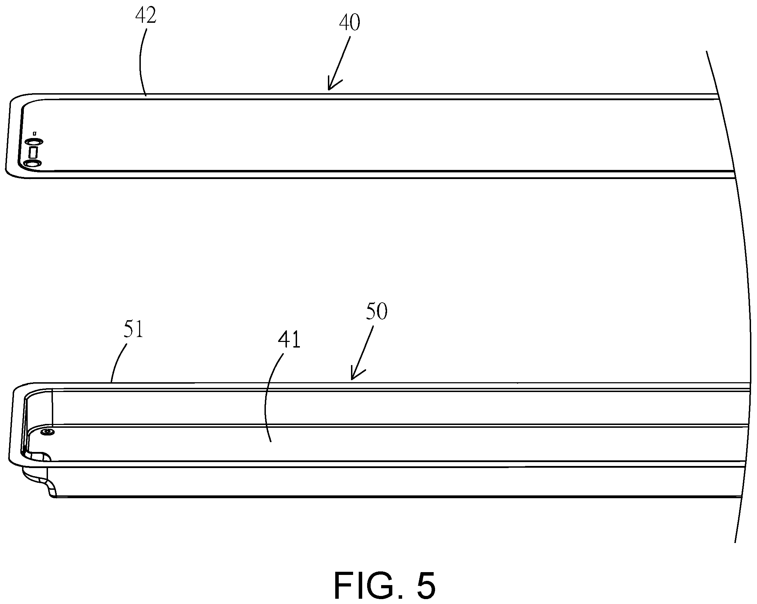

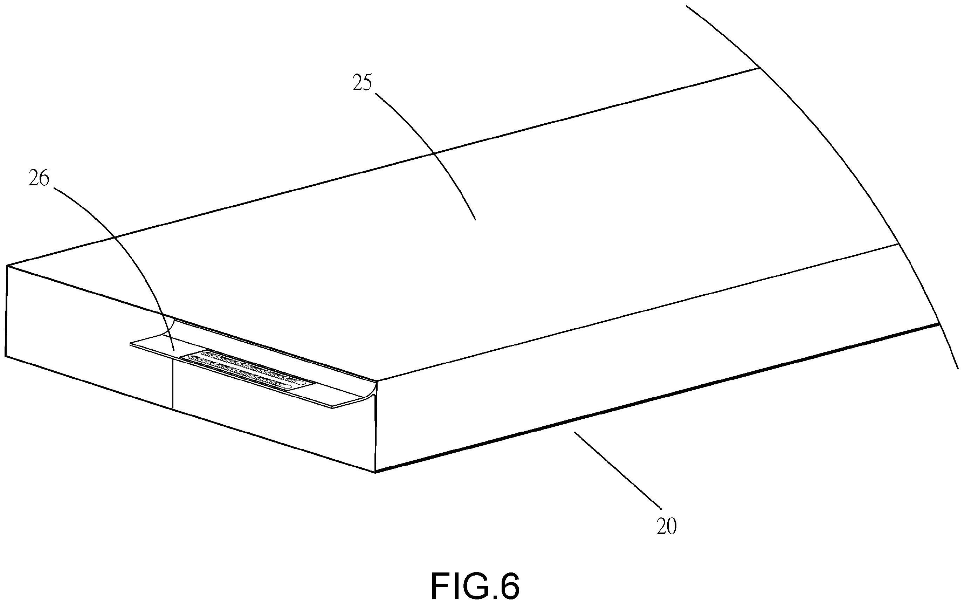

Specifically, the first casing 40 may be a flat plate and the second casing 50 is formed with the accommodating cavity 41. The laminated cell 20 is located in the accommodating cavity 41. The flat plate can facilitate subsequent connection, and is less difficult to process. Alternatively, the first casing 40 is formed with the accommodating cavity 41 and the second casing 50 may be a flat plate. Alternatively, both the first casing 40 and the second casing 50 are formed with the accommodating cavity 41, and the depths of the accommodating cavities 41 of the first casing 40 and the second casing 50 may be the same or different. Referring to FIG. 5, the second casing 50 is formed with the accommodating cavity 41, and the accommodating cavity 41 is used for accommodating the laminated cell 20 shown in FIG. 6.

It should be noted that, in the case where the first casing 40 is formed with the accommodating cavity 41, when the laminated cell 20 is molded on the first casing 40, since the first casing 40 is formed with the accommodating cavity 41, the function of limiting and aligning the laminated cell 20 can be directly realized in the lamination process, which reduces the requirements for equipment and technology during the assembly process and improves the product yield. Correspondingly, when the second casing 50 is formed with the accommodating cavity 41, the forming of the laminated cell 20 on the second casing 50 can also achieve the corresponding technical effect.

In an embodiment, as shown in FIG. 5, a first flange 42 is provided on a circumferential outer edge of the first casing 40 and a second flange 51 is provided on a circumferential outer edge of the second casing 50. Connecting the first casing 40 and the second casing 50 includes welding the first flange 42 and the second flange 51, so as to realize the stable connection of the first casing 40 and the second casing 50, and to ensure that the first casing 40 and the second casing 50 can form a sufficiently large welding seam, and the welding difficulty is relatively low.

It should be noted that, regarding the first flange 42 provided on the circumferential outer edge of the first casing 40 and the second flange 51 provided on the circumferential outer edge of the second casing 50, it can be understood that, a flange formed to extend outward from the circumferential outer edge of a flat plate, or a flange formed to extend outward from a side wall of a structure having an accommodating cavity, at this time, the flange is substantially perpendicular to the side wall.

In an embodiment, the battery manufacturing method further includes cutting parts of the first flange 42 and the second flange 51 after the first flange 42 and the second flange 51 are welded, so as to reduce the lengths of the first flange 42 and the second flange 51 and ensure that the first flange 42 and the second flange 51 occupy a smaller space.

Optionally, the parts of the first flange 42 and the second flange 51 extending along the battery length direction are cut, and the parts of the first flange 42 and the second flange 51 extending along the battery width direction are cut.

Optionally, only the parts of the first flange 42 and the second flange 51 extending along the battery length direction are cut. Optionally, only the parts of the first flange 42 and the second flange 51 extending along the battery width direction are cut.

In an embodiment, the battery manufacturing method further includes disposing an insulating coating on the first casing 40 before laminating on the first casing 40 to form the laminated cell 20. The laminated cell 20 is located on the insulating coating, so as to ensure that the laminated cell 20 and the first casing 40 are reliably insulated by the insulating coating.

The insulating coating can be made of but not limited to ceramic materials, such as alumina (Al₂O₃) and zirconia (ZrO₂).

In an embodiment, the battery manufacturing method further includes disposing an insulating mylar 10 on the first casing 40 before laminating on the first casing 40 to form the laminated cell 20. The laminated cell 20 is located on the insulating mylar 10, so as to ensure that the laminated cell 20 and the first casing 40 are reliably insulated by the insulating mylar 10.

It should be noted that the laminated cell 20 includes the separator film 23 different from the insulating mylar 10. That is, the separator film 23 and the insulating mylar 10 are independent structures, and the separator film 23 and the insulating mylar 10 can made of the same or different materials. In fact, the insulating mylar 10 is independent from the laminated cell 20. The insulating mylar 10 and the laminated cell 20 are two different parts, and the laminated cell 20 does not include the insulating mylar 10.

Optionally, the insulating mylar 10 may be directly laid on the first casing 40. When the first casing 40 has the accommodating cavity 41, before the lamination is performed, the lower surface of the insulating mylar 10 may not be attached to the upper surface of the first casing 40, and after the lamination starts, the insulating mylar 10 is tightly pressed against the upper surface of the first casing 40. Of course, when the first casing 40 is a flat plate, the lower surface of the insulating mylar 10 may be attached to the upper surface of the first casing 40.

Optionally, the insulating mylar 10 is disposed on the first casing 40 in a manner that the lower surface of the insulating mylar 10 overlaps the upper surface of the first casing 40. That is, before the lamination starts, the lower surface of the insulating mylar 10 is attached to the upper surface of the first casing 40, which can ensure a good positioning effect.

It should be noted that the lower surface of the insulating mylar 10 overlaps the upper surface of the first casing 40, at this time, the insulating mylar 10 and the first casing 40 may not be fixedly disposed.

Optionally, the battery manufacturing method further includes adhering the lower surface of the insulating mylar 10 and the upper surface of the first casing 40. That is, the insulating mylar 10 and the first casing 40 are fixedly disposed.

Specifically, the insulating mylar 10 is adhered to the first casing 40, which realizes fixing the insulating mylar 10 to the first casing 40.

Optionally, the insulating mylar 10 is adhered to the second casing 50, which realizes fixing the insulating mylar 10 to the second casing 50.

In an embodiment, the battery manufacturing method further includes wrapping the laminated cell 20 with the insulating mylar 10 after laminating to form the laminated cell 20, so as to ensure that the laminated cell 20 is insulated from the battery casing by the insulating mylar 10. Further, after wrapping the laminated cell 20 with the insulating mylar 10, the second casing 50 and the first casing 40 are connected to seal the laminated cell 20.

In an embodiment, as shown in FIG. 2, the insulating mylar 10 includes a first region 11 and a second region 12. The laminated cell 20 is movably disposed relative to the first region 11, and at least a part of the second region 12 can be adhered to the laminated cell 20. At least a part of the first region 11 is not adhesive. Therefore, during the forming process of the laminated cell 20, the part that first contacts the first region 11 can move relative to the first region 11, and by moving it to a relatively fixed position, subsequent reliable forming can be ensured. On the other hand, the second region 12 is adhesive, thus the second region 12 can be reliably adhered to the laminated cell 20 when the laminated cell 20 is wrapped with the insulating mylar 10 later, and can position the part that first contacts the first region 11 during the forming process of the laminated cell 20, so as to prevent the laminated cell 20 from entering the second region 12 excessively.

Optionally, a boundary between the first region 11 and the second region 12 may be adhesive, and the edge of the laminated cell 20 may be located at the boundary between the first region 11 and the second region 12 to realize the adhesion.

Optionally, both the first region 11 and the second region 12 of the insulating mylar 10 may not be adhesive.

A part of the insulating mylar 10 may be an adhesive insulating mylar, or an adhesive may be provided on a non-adhesive insulating mylar, so as to ensure the adhesive performance, that is, to form the second region 12 having stickiness.

In an embodiment, the first region 11 is a rectangule, the area of the first region 11 is s. Before the laminated cell 20 is wrapped with the insulating mylar 10, the contact area between the laminated cell 20 and the insulating mylar 10 is t, and 0.5t≤s≤1.2t. In the forming process of the laminated cell 20, the first piece cannot be put in place at the corresponding position of the insulating mylar 10 at one time, and the first piece needs to be moved on the surface of the insulating mylar 10 to realize positioning. Therefore, the non-adhesive first region 11 is provided. After the first lamination is completed, subsequent laminations may cause the first pole piece to shift and result in poor alignment, and the second region 12 having stickiness can ensure that the first lamination does not shift. Moreover, after the lamination is completed, the laminated cell 20 can be directly wrapped by using the adhesive layer provided in the second region 12, so as to prevent problems such as poor alignment between the tabs of the laminated cell 20 during the transfer process.

It should be noted that the area of the first region 11 is s, and before the laminated cell 20 is wrapped with the insulating mylar 10, the area where the laminated cell 20 is in contact with the insulating mylar 10 is t. It can be further understood that the length of the first region 11 may be equal to the length of the laminated cell 20, and the width of the first region 11 may be greater than the width of the laminated cell 20, or the width of the first region 11 may be equal to the width of the laminated cell 20, or the width of the first region 11 may be smaller than the width of the laminated cell 20, so as to prevent the laminated cell 20 from excessively deviating from the first region 11 while ensuring that the laminated cell 20 can move in the first region 11. The length and width of the laminated cell 20 can be considered as the length and width of the surface where the laminated cell 20 is in contact with the insulating mylar 10 before the laminated cell 20 is wrapped with the insulating mylar 10, and the length is not smaller than the width.

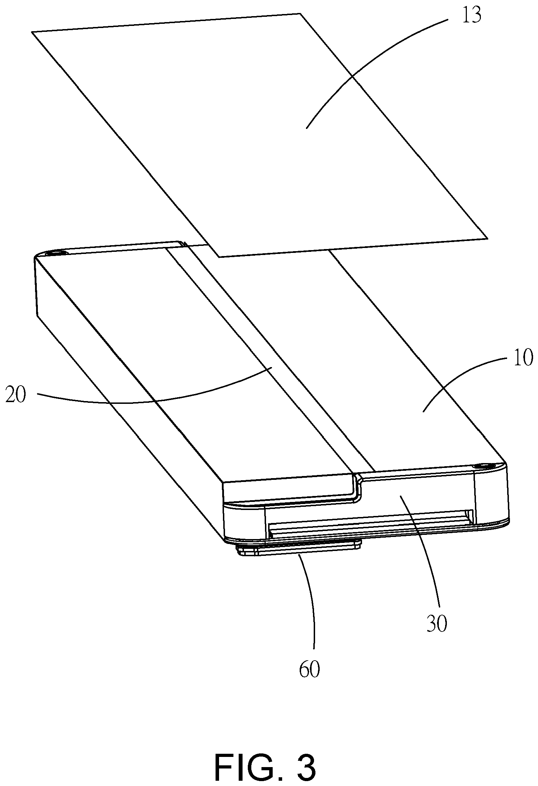

In an embodiment, the battery manufacturing method further includes disposing a protective support 30 at at least one end of the laminated cell 20 after laminating to form the laminated cell 20. The protective support 30 is located on the first casing 40, the laminated cell 20 is wrapped with the insulating mylar 10, and the insulating mylar 10 covers the protective support 30. That is, the fixing of the protective support 30 is also realized in the process of wrapping the laminated cell 20 with the insulating mylar 10, thereby omitting a process of subsequently fixing the protective support 30. As shown in FIG. 3, the end portion of the insulating mylar 10 covers the protective support 30.

It should be noted that the protective support 30 is disposed between the battery casing and the laminated cell 20 to provide insulation and fixing functions. Two protective supports 30 are provided, and the two protective supports 30 are respectively located at both ends of the laminated cell 20. After the laminated cell 20 is completed, the two protective supports 30 are respectively disposed at both ends of the laminated cell 20, and may or may not be located on the insulating mylar 10 but it is necessary to ensure that the insulating mylar 10 can cover a part of the protective support 30 in the subsequent process of wrapping with the insulating mylar 10.

Optionally, both ends of the insulating mylar 10 extend beyond both ends of the laminated cell 20, and are fixedly connected to the protective supports 30 at both ends. The connection may be realized by the adhesiveness of the insulating mylar 10, or the fixed connection may be further realized by hot melting.

In an embodiment, after wrapping the laminated cell 20 with the insulating mylar 10, a part of the laminated cell 20 is not wrapped by the insulating mylar 10. The battery manufacturing method further includes partially adhering a fixing insulating mylar 13 to the insulating mylar 10, and partially adhering the fixing insulating mylar 13 to the laminated cell 20 that is not wrapped by the insulating mylar 10, so that the fixing insulating mylar 13 can reliably fix the insulating mylar 10 to the laminated cell 20 and prevent the insulating mylar 10 from falling off.

Optionally, both ends of the insulating mylar 10 are spaced apart on the laminated cell 20 to expose a part of the laminated cell 20, and the fixing insulating mylar 13 overlaps with both ends of the insulating mylar 10 while covering the exposed part of the laminated cell 20, so as to ensure that the insulating mylar 10 is reliably wrapped on the laminated cell 20 to achieve reliable electrical isolation.

It should be noted that, in some embodiments, the fixing insulating mylar 13 may be adhered to the protective support 30.

In an embodiment, a post assembly 60 is provided on the first casing 40 or the second casing 50. The battery manufacturing method further includes connecting the laminated cell 20 and the post assembly 60 before connecting the second casing 50 and the first casing 40, so as to ensure that the laminated cell 20 and the post assembly 60 can be connected before being sealed in the second casing 50 and the first casing 40.

Furthermore, the post assembly 60 is provided on the first casing 40 or the second casing 50, and the battery manufacturing method further includes connecting the laminated cell 20 and the post assembly 60 before wrapping the laminated cell 20 with the insulating mylar 10, thereby facilitating the connection between the laminated cell 20 and the post assembly 60. The operation is simple, and there is a sufficient space for installation and fixing. For example, when a tab 26 of the laminated cell 20 and the post assembly 60 are welded, a sufficient welding space can be ensured.

The post assembly 60 is integrated on the first casing 40, and after isolation with use of the insulating mylar 10, the lamination is directly performed on the first casing 40 carrying the insulating mylar 10. In this way, the alignment of the laminated cell 20 and the post assembly 60 is directly realized in the lamination process, and after the lamination is completed, the laminated cell 20 and the post assembly 60 can be electrically connected directly, which not only simplifies the battery assembly process but also reduces the risk of poor alignment between the tabs of different pole pieces in the laminated cell 20 during the transfer process.

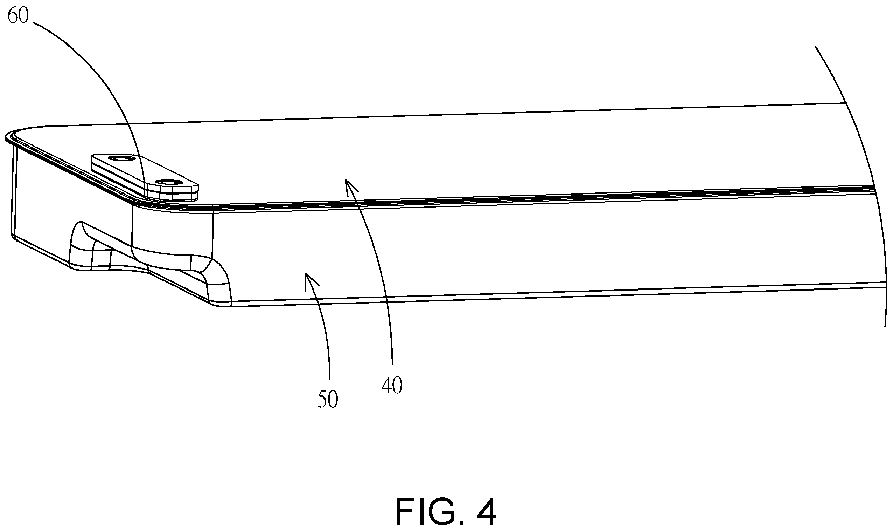

It should be noted that two post assemblies 60 are provided, and the two post assemblies 60 may both be located on the first casing 40 or the second casing 50, or the two post assemblies 60 may be respectively located on the first casing 40 and the second casing 50. As shown in FIG. 4, it can be seen that the post assembly 60 is disposed on the first casing 40.

In an embodiment, as shown in FIG. 7, the laminated cell 20 includes the first pole piece 21, the second pole piece 22, and the separator film 23. The separator film 23 is disposed between the first pole piece 21 and the second pole piece 22, and a plurality of pairs of the first pole piece 21 and the second pole piece 22 are stacked to form the laminated cell 20. The separator film 23 is a non-continuous separator film, that is, when lamination is performed, independent first pole pieces 21, second pole pieces 22, and separator films 23 are cyclically placed on the first casing 40 to form the laminated cell 20. After the first pole piece 21, the second pole piece 22, and the separator film 23 are laminated, a hot pressing process can be performed.

Further, the separator film 23 includes a plurality of sub-separator films 233, and the laminated cell 20 includes a plurality of pole piece units. Each of the pole piece unit includes the first pole piece 21, the second pole piece 22, and the sub-separator film 233 disposed between the first pole piece 21 and the second pole piece 22. The sub-separator film 233 is disposed between adjacent pole piece units, and the sub-separator film 233 between adjacent pole piece units is a non-continuous separator film, so as to ensure that each pole piece unit can be stacked independently. Optionally, the sub-separator films 233 between adjacent pole piece units can be disposed independently. For example, when three pole piece units are provided, there are two sub-separator films 233 between adjacent pole piece units, and the two sub-separator films 233 are disposed independently. Alternatively, the sub-separator films 233 between adjacent pole piece units may be connected. For example, when three pole piece units are provided, one integral sub-separator film 233 is disposed between adjacent pole piece units. Therefore, the plurality of sub-separator films 233 included in the separator film 23 may be uniform, or at least one of the plurality of sub-separator films 233 included in the separator film 23 may be different from the others.

In an embodiment, as shown in FIG. 8, the laminated cell 20 includes the first pole piece 21, the second pole piece 22, and the separator film 23. The separator film 23 is disposed between the first pole piece 21 and the second pole piece 22, and a plurality of pairs of the first pole piece 21 and the second pole piece 22 are stacked to form the laminated cell 20. The separator film 23 is a continuous separator film, that is, in the specific lamination process, the separator film 23 is an uninterrupted separator film, such that the first pole pieces 21 and the second pole pieces 22 are sequentially arranged on both sides of the separator film 23.

It should be noted that, when the insulating mylar 10 or the insulating coating is disposed on the first casing 40, the first pole piece 21, the second pole piece 22 or the separator film 23 may first contact the insulating mylar 10 or the insulating coating. The first pole piece 21, the second pole piece 22, and the separator film 23 can all be the first to contact the insulating mylar 10 or the insulating coating in the lamination process, as long as it is ensured that the separator film 23 is disposed between the first pole piece 21 and the second pole piece 22. The sizes of the first pole piece 21 and the second pole piece 22 may be the same or different. One of the first pole piece 21 and the second pole piece 22 is a positive pole piece and the other is a negative pole piece, and the positive pole piece cannot contact the insulating mylar 10 or the insulating coating first.

Optionally, the separator film 23 directly contacts the first casing 40 first, so that the laminated cell 20 and the first casing 40 are separated by the separator film 23. That is, when the insulating mylar 10 or the insulating coating is not disposed on the first casing 40, it needs to be ensured that the separator film 23 contacts the first casing 40 first to ensure insulation.

Further, the separator film 23 includes a first end 231 and a second end 232. The first end 231 is first stacked before the second end 232. The first end 231 and the second end 232 of the separator film 23 are respectively the lamination starting point and the lamination ending end of the separator film 23. That is, when the lamination starts, the first end 231 first passes through the first casing 40, and after the stacking is completed, the second end 232 is formed by cutting the separator film 23.

It should be noted that, when the lamination is performed, the first end 231 of the separator film 23 can be directly pressed under the first pole piece 21 or the second pole piece 22 located at the bottom. Alternatively, the first end 231 of the separator film 23 may not be directly pressed under the first pole piece 21 or the second pole piece 22. That is, the first end 231 is located outside the first pole piece 21 or the second pole piece 22. Therefore, after the subsequent lamination is completed, the first end 231 needs to be wrapped on the laminated cell 20.

The second end 232 of the separator film 23 may just cover the first pole piece 21 or the second pole piece 22 located at the top. That is, the second end 232 of the separator film 23 does not cover a side of the laminated cell 20. Alternatively, the second end 232 of the separator film 23 may cover the side of the laminated cell 20.

In some embodiments, by adjusting the positions of the first end 231 and the second end 232 of the separator film 23, the outer part of the laminated cell 20 can be wrapped by the separator film 23. Alternatively, the outer part of the laminated cell 20 may not be wrapped by the separator film 23. Nevertheless, the disclosure is not limited thereto.

In some embodiments, after the laminated cell 20 is formed, the laminated cell 20 may be partially raised for the second end 232 to come between a bottom surface 24 of the laminated cell 20 and the first casing 40, but this process requires an additional manufacturing process.

In this embodiment, after the laminated cell 20 is formed, it is not required to move the laminated cell 20 relative to the first casing 40, so as to ensure that the second end 232 does not contact the bottom surface 24.

As shown in FIG. 6, the laminated cell 20 includes a cell body 25 and the tab 26, and the tab 26 extends out in the length direction of the cell body 25. The tab 26 is connected to the post assembly 60. The tab 26 and the post assembly 60 can be directly connected, that is, the tab 26 and the post assembly 60 can be directly welded, or the tab 26 and the post assembly 60 can be connected through a metal adapter. The connection may be realized by welding or using of rivets, etc., but the disclosure is not limited thereto.

It should be noted that the cell body 25 includes two or more pole pieces (including the first pole piece 21 and the second pole piece 22), and the tab 26 includes two or more single-piece tabs. The single-piece tabs respectively extend from the corresponding pole pieces. The width of the single-piece tab is smaller than the width of the pole piece. A plurality of single-piece tabs are stacked to form the tab 26, and are connected to the post assembly 60. The tab 26 can be welded to the post assembly 60. The single-piece tab is made of a metal foil having good electrical and thermal conductivity, such as aluminum, copper, or nickel. Optionally, the width of the single-piece tab may be equal to the width of the tab.

In some embodiments, two post assemblies 60 are provided, and the two post assemblies 60 are respectively a positive post assembly and a negative post assembly. Further, two tabs 26 are provided, and the two tabs 26 are respectively a positive tab and a negative tab. The positive post assembly and the positive tab are connected, and the negative post assembly and the negative tab are connected.

It should be noted that two or more single-piece tabs can be pre-welded after being stacked. The pre-welding can be ultrasonic welding. Then, the single-piece tabs can be welded to the post assembly 60, so as to ensure the welding reliability of the tab 26 and the post assembly 60. The welding of the tab 26 and the post assembly 60 can be realized by using laser welding or resistance welding. After the welding is completed, the tab 26 may be bent to avoid electrical connection between the tab 26 and other components.

It should be noted that laser welding, ultrasonic welding, resistance welding, etc. can be used to realize the welding in the foregoing embodiments.

An embodiment of the disclosure further provides a battery, including the battery obtained by the above-mentioned battery manufacturing method.

In the battery according to an embodiment of the disclosure, the laminated cell 20 is formed by laminating on the first casing 40, so as to omit the process of moving the laminated cell 20 to the battery casing, thereby improving the manufacturing efficiency of the battery.

An embodiment of the disclosure further provides a battery. The battery includes the first casing 40, the second casing 50, and the laminated cell 20. The laminated cell 20 is sealed in the first casing 40 and the second casing 50. The laminated cell 20 includes the first pole piece 21, the second pole piece 22, and the separator film 23. The separator film 23 is disposed between the first pole piece 21 and the second pole piece 22. The separator film 23 includes the first end 231 and the second end 232. The first end 231 is the starting end when the separator film 23 is stacked, and the second end 232 is the ending end when the separator film 23 is stacked. The laminated cell 20 has the bottom surface 24. The bottom surface 24 is formed first when stacking to form the laminated cell 20, and the second end 232 does not contact the bottom surface 24.

The battery according to an embodiment of the disclosure includes the laminated cell 20, the first casing 40, and the second casing 50. The laminated cell 20 is sealed in the first casing 40 and the second casing 50. Since the second end 232 of the separator film 23 is prevented from contacting the bottom surface 24, it can be ensured that the positions of the laminated cell 20 and the first casing 40 are not adjusted during the battery formation process, thereby ensuring the forming efficiency and forming quality of the battery.

It should be noted that, regarding the bottom surface 24 of the laminated cell 20, the first pole piece 21, the second pole piece 22 or the separator film 23 contacting the first casing 40 first in the process of laminating to form the laminated cell 20 (the separator film 23 can directly contact the first casing 40, while the first pole piece 21 and the second pole piece 22 need to be in indirect contact with the first casing 40 through the insulating coating or the insulating mylar 10) can be understood as the formation of the bottom surface 24 of the laminated cell 20. The second end 232 does not contact the bottom surface 24. That is, after the laminated cell 20 is formed on the first casing 40, the laminated cell 20 does not move relative to the first casing 40.

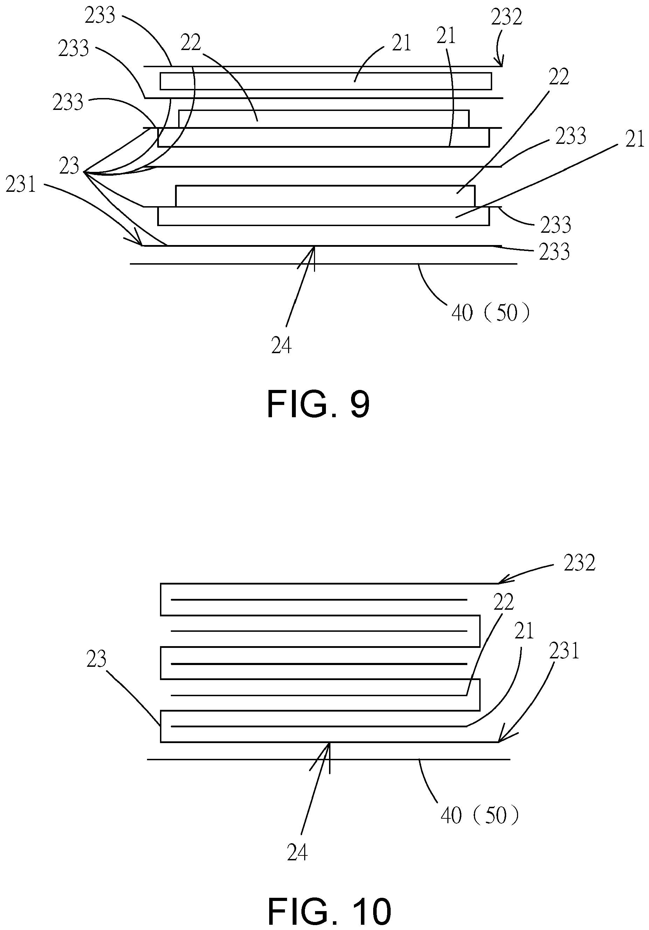

In an embodiment, as shown in FIG. 9, the separator film 23 is a non-continuous separator film, and the separator film 23 includes a plurality of sub-separator films 233. The first end 231 is one end of the sub-separator film 233 stacked first, and the second end 232 is one end of the sub-separator film 233 stacked last. That is, the independent sub-separator films 233 are sequentially stacked, and the ending end or starting end of the sub-separator film 233 stacked first can be considered as the first end 231 of the separator film 23 and the ending end or starting end of the sub-separator film 233 stacked last can be considered as the second end 232 of the separator film 23. For further definitions of the non-continuous separator film, please refer to the battery manufacturing method described above, which will not be repeated hereinafter.

In an embodiment, the separator film 23 is a continuous separator film. That is, one end of the separator film 23 is the lamination starting end and the other end formed after cutting is the lamination ending end. That is, the separator film 23 includes the first end 231 and the second end 232, and as shown in FIG. 10, the first pole piece 21 and the second pole piece 22 are respectively located on both sides of the separator film 23.

In an embodiment, the length of the battery is a, 400mm≤a≤2500mm, the width of the battery is b, the height of the battery is c, 2b≤a≤50b, and/or 0.5c≤b≤20c.

Further, 50mm≤b≤200mm, and 10mm≤c≤100mm.

Preferably, 4b≤a≤25b, and/or 2c≤b≤10c.

In the battery according to the above embodiment, under the condition of ensuring sufficient energy density, the ratio of the length to the width of the battery is relatively large, and further, the ratio of the width to the height of the battery is relatively large.

In an embodiment, the length of the battery is a, the width of the battery is b, and 4b≤a≤7b. That is, the ratio of the length to the width of the battery in this embodiment is relatively large, which increases the energy density of the battery and facilitates the subsequent formation of a battery module.

In an embodiment, the height of the battery is c, and 3c≤b≤7c. The ratio of the width to the height of the battery is relatively large, which also facilitates the formation under the condition of ensuring sufficient energy density.

Optionally, the length of the battery can be 500mm-1500mm, the width of the battery can be 80mm-150mm, and the height of the battery can be 15mm-25mm.

It should be noted that the length of the battery is the size of the battery in the length direction, the width of the battery is the size of the battery in the width direction, and the height of the battery is the size of the battery in the height direction, that is, the thickness of the battery.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative

## Claims

1. A battery manufacturing method, comprising:
providing a first casing (40), wherein the first casing includes one of an upper cover and a bottom plate of a battery casing; and
laminating on the first casing (40) to form a laminated cell (20).

2. The battery manufacturing method according to claim 1, further comprising:
providing a second casing (50), and connecting the second casing (50) and the first casing (40) to seal the laminated cell (20), wherein the second casing (50) includes the other one of the upper cover and the bottom plate of the battery casing.

3. The battery manufacturing method according to claim 2, wherein a first flange (42) is provided on a circumferential outer edge of the first casing (40), and a second flange (51) is provided on a circumferential outer edge of the second casing (50), and connecting the second casing (50) and the first casing (40) comprises:
welding the first flange (42) and the second flange (51).

4. The battery manufacturing method according to any one of claims 1-3, further comprising:
disposing an insulating coating on the first casing (40) before laminating on the first casing (40) to form the laminated cell (20),
wherein the laminated cell (20) is located on the insulating coating.

5. The battery manufacturing method according to any one of claims 1-3, further comprising:
disposing an insulating mylar (10) on the first casing (40) before laminating on the first casing (40) to form the laminated cell (20),
wherein the laminated cell (20) is located on the insulating mylar (10).

6. The battery manufacturing method according to claim 5, further comprising:
after laminating to form the laminated cell (20),
disposing a protective support (30) on at least one end of the laminated cell (20), wherein the protective support (30) is located on the first casing (40); and
wrapping the laminated cell (20) with the insulating mylar (10), wherein the insulating mylar (10) covers the protective support (30).

7. The battery manufacturing method according to any one of claims 1-3, wherein the laminated cell (20) comprises a first pole piece (21), a second pole piece (22) and a separator film (23), and the separator film (23) is disposed between the first pole piece (21) and the second pole piece (22),
wherein the separator film (23) is a continuous separator film, or
the separator film (23) comprises a plurality of sub-separator films (233), and the laminated cell (20) comprises a plurality of pole piece units, wherein each of the pole piece units comprises the first pole piece (21), the second pole piece (22), and one of the sub-separator films (233) disposed between the first pole piece (21) and the second pole piece (22), the sub-separator film (233) is disposed between adjacent pole piece units, and the sub-separator film (233) between the adjacent pole piece units is a non-continuous separator film.

8. The battery manufacturing method according to claim 7, wherein the separator film (23) first directly contacts the first casing (40), such that the laminated cell (20) and the first casing (40) are isolated by the separator film (23).

9. A battery, comprising a battery obtained by the battery manufacturing method according to claim 1.

10. A battery, comprising:
a first casing (40);
a second casing (50); and
a laminated cell (20), wherein the laminated cell (20) is sealed in the first casing (40) and the second casing (50), the laminated cell (20) comprises a first pole piece (21), a second pole piece (22) and a separator film (23), and the separator film (23) is disposed between the first pole piece (21) and the second pole piece (22),
wherein the separator film (23) comprises a first end (231) and a second end (232), the first end (231) is a starting end when the separator film (23) is stacked, the second end (232) is an ending end when the separator film (23) is stacked, the laminated cell (20) has a bottom surface (24), the bottom surface (24) is formed first when stacking to form the laminated cell (20), and the second end (232) does not contact the bottom surface (24).

11. The battery according to claim 9 or 10, wherein a length of the battery is a, a width of the battery is b, a height of the battery is c, and 2b≤a≤50b and/or 0.5c≤b≤20c; and
400mm≤a≤2500mm.

## Amended claims

### Amended claims in accordance with Rule 137(2) EPC.

1. A battery manufacturing method, comprising:
providing a first casing (40), wherein the first casing includes one of an upper cover and a bottom plate of a battery casing; and
laminating on the first casing (40) to form a laminated cell (20),
wherein the laminated cell (20) comprises a first pole piece (21), a second pole piece (22) and a separator film (23), and the separator film (23) is disposed between the first pole piece (21) and the second pole piece (22),
wherein the separator film (23) is a continuous separator film,
wherein the separator film (23) comprises a first end (231) and a second end (232), the first end (231) is a starting end when the separator film (23) is stacked, the second end (232) is an ending end when the separator film (23) is stacked, the laminated cell (20) has a bottom surface (24), the bottom surface (24) is formed first when stacking to form the laminated cell (20), and the second end (232) does not contact the bottom surface (24).

2. The battery manufacturing method according to claim 1, further comprising:
providing a second casing (50), and connecting the second casing (50) and the first casing (40) to seal the laminated cell (20), wherein the second casing ( 50) includes the other one of the upper cover and the bottom plate of the battery casing.

3. The battery manufacturing method according to claim 2, wherein a first flange (42) is provided on a circumferential outer edge of the first casing (40), and a second flange (51) is provided on a circumferential outer edge of the second casing (50), and connecting the second casing (50) and the first casing (40) comprises:
welding the first flange (42) and the second flange (51).

4. The battery manufacturing method according to any one of claims 1-3, further comprising:
disposing an insulating coating on the first casing (40) before laminating on the first casing (40) to form the laminated cell (20),
wherein the laminated cell (20) is located on the insulating coating.

5. The battery manufacturing method according to any one of claims 1-3, further comprising:
disposing an insulating mylar (10) on the first casing (40) before laminating on the first casing (40) to form the laminated cell (20),
wherein the laminated cell (20) is located on the insulating mylar (10).

6. The battery manufacturing method according to claim 5, further comprising:
after laminating to form the laminated cell (20),
disposing a protective support (30) on at least one end of the laminated cell (20), wherein the protective support (30) is located on the first casing (40); and
wrapping the laminated cell (20) with the insulating mylar (10), wherein the insulating mylar (10) covers the protective support (30).

7. The battery manufacturing method according to claim 1, wherein the separator film (23) first directly contacts the first casing (40), such that the laminated cell (20) and the first casing (40) are isolated by the separator film (23).

8. A battery, comprising:
a first casing (40);
a second casing (50); and
a laminated cell (20), wherein the laminated cell (20) is sealed in the first casing (40) and the second casing (50), the laminated cell (20) comprises a first pole piece (21), a second pole piece (22) and a separator film (23), the separator film (23) is disposed between the first pole piece (21) and the second pole piece (22), and the separator film (23) is a continuous separator film,
wherein the separator film (23) comprises a first end (231) and a second end (232), the first end (231) is a starting end when the separator film (23) is stacked, the second end (232) is an ending end when the separator film (23) is stacked, the laminated cell (20) has a bottom surface (24), the bottom surface (24) is formed first when stacking to form the laminated cell (20), and the second end (232) does not contact the bottom surface (24).

9. The battery according to claim 8, wherein a length of the battery is a, a width of the battery is b, a height of the battery is c, and 2b≤a≤50b and/or 0.5c≤b≤20c; and
400mm≤a≤2500mm.
